# EUROPEAN PATENT SPECIFICATION

(11) **EP 1 288 160 B1**
(45) Date of publication and mention of the grant of the patent: **12.03.2008**
(21) Application number: 01935931.4
(22) Date of filing: 24.04.2001
(51) Int. Cl.: C01B 31/02, C01B 31/14, C01B 31/12

(54) **PYROLYZED HARD CARBON MATERIAL, PREPARATION AND ITS APPLICATIONS**
PYROLYSIERTES, HARTES KOHLENSTOFF-MATERIAL, HERSTELLUNG UND SEINE VERWENDUNG
CHARBON DUR SUSCEPTIBLE D'ETRE PYROLYSE, SON PROCEDE DE FABRICATION ET SES APPLICATIONS

(30) Priority: 27.04.2000 CN 00106225
(43) Date of publication of application: 05.03.2003
(73) Proprietor: Institute of Physics Chinese Academy of Sciences, Haidian District, Beijing 100080 (CN)
(72) Inventor: WANG, Qing, Haidian District, Beijing 100080 (CN); LI, Hong, Haidian District, Beijing 100080 (CN); HUANG, Xuejie, Haidian District, Beijing 100080 (CN); CHEN, Liquan, Haidian District, Beijing 100080 (CN)
(74) Representative: Killin, Stephen James
(86) International application number: PCT/CN2001/000613
(87) International publication number: WO 2001/098209

(56) References cited:
- CN-A- 1 048 834
- CN-A- 1 274 957
- US-A- 3 969 124
- US-A- 5 045 298
- US-A- 5 215 690
- US-A- 5 677 373
- US-A- 6 024 899

## Description

### TECHNICAL FIELD

Carbonaceous material and its preparation process are introduced in this patent. Especially a kind of pyrolyzed hard carbon material, preparation and its applications are involved.

### BACKGROUND OF THE INVENTION

Based on their ability to be graphitized, carbonaceous materials are generally divided into soft carbon (graphitizable) and hard carbon (non-graphitizable). For example, the products of petroleum, coal, pitch, polyvinyl chloride and anthracene after carbonization belong to soft carbon, whereas those of cellulose, carbohydrates, furan resin, phenolic resin and PVDF are hard carbon. At elevated temperature, the precursors of soft carbon can melt into liquid state and polymerize. In light of surface tension, these polymerized intermediates form granular-like beads, which are insoluble in quinoline and called mesophase beads. The granular like morphology cannot be changed during further carbonization or graphitization. However, the precursors of hard carbon cannot melt upon heat treatment due to the presence of large quantities of interconnection bonds; instead, the precursors directly carbonize via solid state without forming the spherical mesophase beads. The obtained graphene sheets are nonparallel interconnected. Even at very high temperature, it is difficult for the hard carbon to be graphitized. After high temperature heat treatment, the obtained hard carbon is generally consisted of interconnected graphene sheets stacking no more than twenty layers. The layer spacing is about 0.37 nm on average, and the diameter within one graphene layer is not more than 5 nm. There are still some non-graphite structures, such as sp³ carbon atoms within crystal structure. The disordered stacking of graphene layers gives rise to large quantities of cavities, and the formed micropores account for 20~50 percent of the total volume. The interconnected structure cannot be easily removed even at carbon's sublimation temperature. Commonly, the products from direct carbonization via solid state still retain the morphology and texture of the precursors. Consequently, it is not easy to prepare spherical materials from hard carbon. The obtained products normally have irregular shape, non-uniform particle size, and low packing density, which cannot meet the practical demands in many fields.

### SUMMARY OF THE INVENTION

It is the objective of the present invention to overcome the difficulties in producing spherical hard carbon materials from existing precursors, which always have irregular morphology, non-uniform particle size and low packing density. To increase the packing density and surface smoothness of the products from solid-state carbonization, the present invention provides a method that requires simple technique, low cost and has the adaptability to mass production, through dewatering the precursors to form spherules in liquid state followed by pyrolyzing obtained intermediates. The present invention also provides a kind of pyrolyzed hard carbon material with spherical or ellipsoidal morphology, uniform particle size, high packing density, and its applications, especially in secondary lithium batteries.

### DETAILED DESCRIPTION OF THE INVENTION

The present invention is described as follows:

The pyrolyzed hard carbon in the present invention is a kind of spherule or ellipsoid with smooth surface, particle size of 0.05~100 µm in diameter, and surface roughness not more than 0.5 percent of the particle size; the specific surface Brunauer-Emmett-Teller area (BET area) is between 1 and 4000m²/g; the pore size of micropores and mesopores within the material is 0.3~50 nm; the measured d₀₀₂ is 0.345~0.45 nm and the values of Lc and La are both 1~20 nm from X-ray diffraction (XRD) measurements; The real density is 0.8~2.2 g/cm³ and tap density is 0.35~1.5 g/cm³; The amount of elements besides to carbon is not more than 10 percent in weight within the material. In the present invention, hydrothermal (or using other solvents) method is used to dewater the precursor in liquid state and form spherules. The intermediates are further pyrolyzed at elevated temperatures, and hard carbon products can be finally obtained. The detailed preparation processes are as follows:
(1) Preparation of homogeneous dispersion system. The precursor for hard carbon synthesis, including glucose, sucrose, fructose, cellulose, starch or the mixture of any above precursors in random ratio, is mixed with water to form homogeneous dispersion system with a concentration of 0.05~10 molar per liter; or another precursor for hard carbon synthesis, including phenolic resin, polyacrylonitrile, mixture of epoxy and solidifying reagent phthalic anhydride, or mixture of epoxy, polyformaldehyde and phenol, is mixed with regular organic solvents, such as ethanol, acetone, N,N-dimethylformamide, or the mixture of any above organic solvents in random ratio, to form homogeneous dispersion system with a concentration of 0.05~10M. For the mixture of epoxy and phthalic anhydride, the content of epoxy should not be less than 25 percent in weight; and for the mixture of epoxy, polyformaldehyde and phenol, the content of epoxy should not be less than 25 percent in weight, the content of phenol should not be more than 10 percent in weight, and the rest is polyformaldehyde.
(2) Dewatering in liquid state. The homogeneous dispersion system prepared in step (1) is put into pressure vessel with a fill rate of 30~95 percent; then the sealed pressure vessel is heated to a final temperature of 150~300 degrees centigrade with a heating rate of 30~600 degrees centigrade per hour. The mixture should be maintained at the final temperature for 0~48 hours. Mechanical stirring is optional with a rotate speed of 0~1500 rounds per minute.
(3) Washing and drying. After cooling to ambient temperature with a cooling rate of 1~3000 degrees centigrade per hour, the intermediate is taken out from the pressure vessel and washed with water, ethanol and its aqueous solution at random concentration, then filtrated to the filtrates being transparent. Then the filtrated intermediate is dried at 50~200 degrees centigrade to remove the water.
(4) High temperature carbonization. After drying, the intermediate is placed in furnace either under the protection of inert or hydrogen atmosphere with a flow rate of 0.5~200 milliliter per minute, or under vacuum degree of 0.001~380mmHg; and the intermediate is carbonized with a heating rate of 30~300 degrees centigrade per hour. After reaching the final temperature of 600~3000 degrees centigrade, the intermediate is maintained at constant temperature for 0~48 hours, and then cooled to ambient temperature with a cooling rate of 1~3000 degrees centigrade per hour. Finally, we can obtain the spherical or ellipsoidal pyrolyzed hard carbon.

In addition, in order to improve the dispersibility of the product and to control the distribution of particle size, the present invention also includes adding 0~5 molar per liter of organic additives into the homogeneous dispersion. These organic additives include: glycol, glycerol, tetraethylammonium hydroxide, n-Dipropylamine, tri-n-propylamine, N,N-diethylethanamine, triethanolamine, dibutylamine, pivalic amine, dipentylamine, isopropylamine, tert-butylamine, ethylenediamine, N,N-dimethylbenzylamine, dicyclohexylamine, N,N-dimethylpropanolamine, tetrapropylamine, quaterary ammonium salt D choline, 2-methylpyridine, 3-methylpiperidine, 4-methylpiperidine or 2-imidazolinone.

Furthermore, in order to enhance the porosity of the product, activation reagents can be added in any step of steps (1), (3), or (4) in the present invention. The activation reagents include: zinc chloride, potassium sulfide, potassium sulfate, sodium sulfate, sodium sulfide, phosphoric acid, potassium hydroxide, sodium hydroxide or lithium hydroxide. The weight ratio of the additive to the precursor is 0.1~10. Alternatively, the material can also be activated through gas activation process, of which either the protection gas is displaced by activation gas during or after step (4), or the activation gas flows together with protection gas during step (4). The activation gases include carbon dioxide, water vapor, air or oxygen, of which the flow rate is 0.5~200 milliliters per minute.

Owing to the regular spherical or ellipsoidal appearance, uniform particle size distribution and high packing density, the spherical or ellipsoidal pyrolyzed hard carbon material in the present invention can be widely used in various fields, especially in secondary lithium batteries. When the hard carbon material of present invention is used as negative electrode material for secondary lithium batteries, since the surface area of the material is relatively small, the consumption of lithium to form the passivation layer during charge/ discharge process is less. Though the inner surface of the material is large, the electrolyte cannot penetrate into the nanopores within the material. Consequently, the Coulombic efficiency of the battery is high. Meanwhile, the spherical surface structure of the material benefits the formation of stable passivation layer, thus satisfactory cyclic capability of the battery can be obtained. Large quantities of nano-sized pores inside the material can store lithium, which is beneficial to the enhancement of the batteries' energy densities. In addition, the relatively high packing density can greatly increase the specific energy in volume. All the above merits comprehensively improve the properties of the secondary lithium batteries.

Besides the utilization in secondary lithium batteries, the spherical or ellipsoidal pyrolyzed hard carbon in the present invention can be used as active material for solid lubricants owing to its smooth surface, narrowly distributed range of particle size and self-lubricating property similar to graphite. Moreover, since the spherical or ellipsoidal pyrolyzed hard carbon is isotropy and there are sp³ carbon atoms within the material, the structure of the material is stable, the frication endurance, thermal and chemical stability are high. Therefore, the pyrolyzed hard carbon of the invention can be used as raw material for industrial brush or electrode. Due to its spherical characteristics, the spherical or ellipsoidal pyrolyzed hard carbon in the present invention is also used as alloy additive in metallurgy. Taking advantages of its fine and uniform particle size, the spherical or ellipsoidal pyrolyzed hard carbon of present invention can be used to prepare composite material with high flexibility. Since the precursors in the present invention are all natural and recyclable, the preparation process based on hydrothermal method is harmless to the environment and human beings. The large quantities of nanosized pores within the material result in excellent adsorption capability, thus makes the spherical or ellipsoidal pyrolyzed hard carbon in the present invention as an excellent candidate to be used as hydrogen storage material, carrier for catalysts, sorbents for toxicant or for special uses, decolorizer in food production, or raw material for synthetic human organs. So the spherical or ellipsoidal pyrolyzed hard carbon in the present invention can be widely used in various fields, such as energy storage, metallurgy, chemical industry, light industry, mechanism, food, communication, environment preservation, biomedicine material and national defense, etc.

As described above, the merits of the present invention lie in: The conventional preparation technique of hard carbon directly from solid carbonization has been shifted in the present invention. In the present invention, the precursor is dewatered in liquid state for carbonization. Because the fluidity of organic molecules is greatly increased at high pressure (2~1000 atm), the ordered arrangement of molecules can be enhanced. The addition of organic addictives which have molding and dispersion effects helps the obtained intermediate have very regular spherical or ellipsoidal morphology, and also result in narrowly distributed range of particle size, rendering the material the property of easy-to-control. Further high temperature carbonization process after dewatering does not change the spherical or ellipsoidal morphology, so the screening process can be avoided.

### BRIEF DESCRIPTION OF THE ILLUSTRATIONS

In the illustrations:
FIG1 is the scanning electron microscope (SEM) images of the spherical hard carbon of the present invention in EXAMPLE 1, of which the precursor is sucrose. The magnification of (A) is 20000 folds, and the magnification of (B) is 90000 folds.
FIG.2 is the x-ray diffraction pattern of the spherical hard carbon of the present invention in EXAMPLE 1, of which the precursor is sucrose.
FIG.3 is the charge/ discharge voltage profiles of the negative electrode material for lithium ion batteries, of which the spherical hard carbon of the present invention in EXAMPLE 1 is used as negative electrode material and the precursor is sucrose.

### EXAMPLE

In order to indicate more fully the nature and utility of this invention, the following examples are set forth, it being understood that these examples are presented as illustrative only and are not intended to limit the scope of the invention.

### EXAMPLE 1

Preparation of spherical hard carbon material: 400 grams of sucrose is firstly dissolved in 600 milliliters of water to form homogeneous dispersion system. Organic additive tetraethylammonium hydroxide (TEAOH) is added into above solution to a final concentration of 1 molar per liter, and then followed with stirring. The mixture is put into a 1-liter autoclave (the same autoclave is used in following examples) with stirring. The rotate speed is 800 rounds per minute, and the fill rate is 70 percent. The autoclave is heated to 200 degrees centigrade with a heating rate of 30 degrees centigrade per hour. After 24 hours' duration at 200 degrees centigrade, the autoclave is cooled to ambient temperature with a cooling rate of 1 degree centigrade per hour. The obtained powder is washed by distilled water till the filtrates being transparent. After drying at 120 degrees centigrade, we can obtain the intermediate.

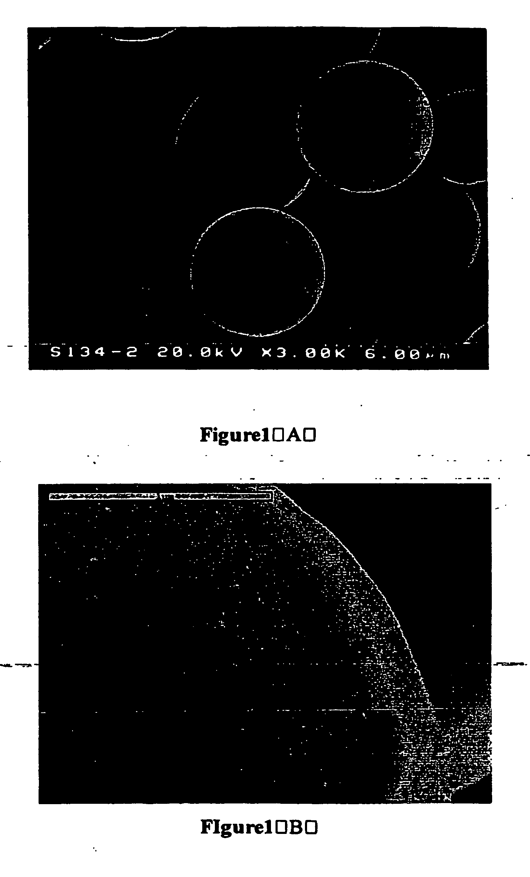

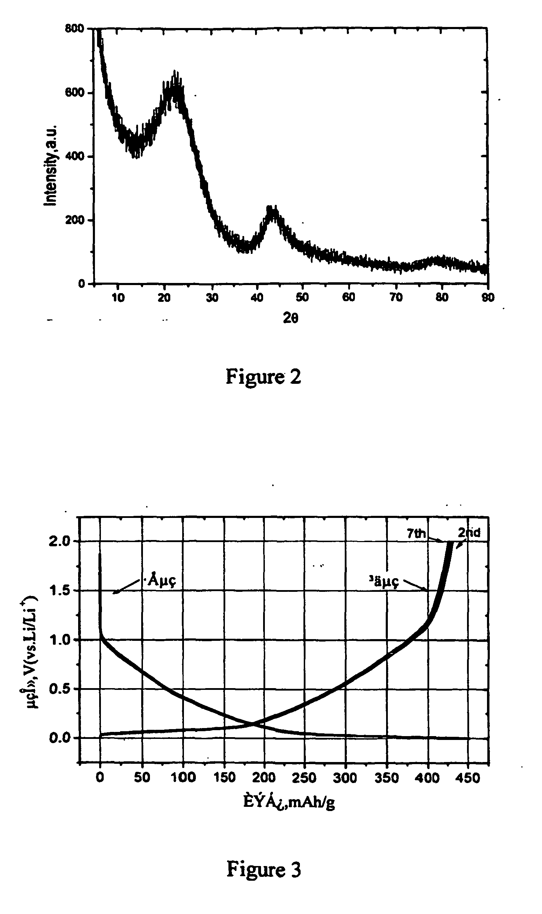

Then the intermediate is put into a tube furnace (1000 millimeters in length, 60 millimeters in diameter, the same tube furnace is used in following examples). Under the protection of nitrogen atmosphere, the tube furnace is heated to 1200 degrees centigrade with a heating rate of 300 degrees centigrade per hour. The flow rate of nitrogen is 25 milliliters per minute. After 6 hours' duration at 1200 degrees centigrade, the furnace is cooled to ambient temperature with a cooling rate of 20 degrees centigrade per hour. The final obtained powder is the spherical pyrolyzed hard carbon material. The scanning electron microscope images of the spherical hard carbon at different magnifications are shown in FIG.1 (A), (B). The x-ray diffraction (XRD) pattern is indicated in FIG2. It is clear that the obtained material has very regular spherical morphology and narrow particle size distribution.

Using XRD method, the d₀₀₂ is measured to be 0.392 nanometers, La is 4.9 nanometers, Lc is 2.8 nanometers, and the average particle size is about 10 micrometers. Using BET method, the specific surface area is about 120 square meters per gram, the diameter of the nanopores is about 0.6~5 nanometers, the real density is 1.78 grams per cubic centimeter, and the tap density is 1.37 grams per cubic centimeter (tap for 500 times).

In order to indicate the utility of the spherical pyrolyzed hard carbon in the present invention as negative electrode material for lithium ion batteries, a lithium-testing cell is designed. The electrolyte is consisted of 1 molar per liter of lithium hexafluorophosphate (LiPF₆) dissolved in a 50/50 volume percent mixture of ethylene carbonate (EC) and dimethyl carbonate (DEC).

Using the spherical hard carbon (denoted as HCS1) as negative electrode material, the preparation of the electrode is described as follows: HCS1 carbon powder and conducting reagent carbon black are firstly mixed with polyvinylidene fluoride and then dissolved in N-methyl pyrrolidone in ambient temperature and pressure. The above slurry is coated on current collector copper foil substrates. The obtained film has a thickness of about 120 micrometers. After drying at 150 degrees centigrade, the film is pressed under the pressure of 20 kilograms per square centimeter and then continues drying at 150 degrees centigrade for another 12 hours. The contents of HCS1, carbon black and polyvinylidene chloride in the dried electrode film are 86, 5, 9 in weight percent, respectively. Lastly, circular pieces with area of 1 square centimeter are cut from the electrode film to act as carbon negative electrode.

Lithium foil with thickness of 0.4 millimeters and area of 1 square centimeter is used as counter electrode. The testing cell is assembled in argon-filled glove box. The charge/ discharge cycling experiments are carried out on a charger controlled by computer. The current density is 0.1 milliamperes per square centimeter. The voltage range during the charge/ discharge cycles is from 0.00 volt to 2.0 volts. The charge/discharge voltage profiles are indicated in FIG3. It is can be seen that the reversible capacity is 430 milliampere hour per gram, which is much higher than that of the commercial negative electrode material for lithium ion batteries, 330 milliampere hour per gram. The cyclic performance of the testing is satisfactory.

### EXAMPLE 2

2000 grams of sucrose is firstly dissolved in 400 milliliters of water to form homogeneous dispersion system. Organic additive glycerol is added into above solution to a final concentration of 1 molar per liter. The above mixture is put into an autoclave and the fill rate is 50 percent. The other conditions and processes to obtain the intermediate are the same as EXAMPLE 1, except the heating duration at 200 degrees centigrade is extended to 36 hours.

Then the intermediate is put into a tube furnace. Under argon atmosphere, the tube furnace is heated to 900 degrees centigrade with a heating rate of 300 degrees centigrade per hour. The flow rate of argon is 200 milliliters per minute. After 6 hours' duration at 900 degrees centigrade, the furnace is cooled to ambient temperature with a cooling rate of 100 degrees centigrade per hour. The final obtained powder is the spherical pyrolyzed hard carbon material in EXAMPLE 1. The x-ray diffraction (XRD) pattern and morphology of the product are similar to sample HCS1. Using XRD method, the d₀₀₂ is measured to be 0.396 nanometers, La is 4.5 nanometers, Lc is 2.2 nanometers, and the average particle size is about 100 micrometers. Using BET method, the specific surface area is about 2.1 square meters per gram, the diameter of the nanopores is about 0.6~0.8 nanometers, the real density is 1.77 grams per cubic centimeter, and the tap density is 1.37 grams per cubic centimeter. Content of the impurity is about 1 percent in weight of the material.

### EXAMPLE 3

400 grams of sucrose is firstly dissolved in 850 milliliters of water to form homogeneous dispersion system. Organic additive N,N-diethylethanamine is added into above solution to a final concentration of 1 molar per liter. In addition, 138 grams of zinc chloride, as activation reagent, is also dissolved in the above dispersion system. The above mixture is put into an autoclave and the fill rate is 95 percent. The other conditions and processes to obtain the intermediate are the same as EXAMPLE 1, except the heating duration at 200 degrees centigrade is extended to 36 hours.

Then the intermediate is put into a tube furnace. Under argon atmosphere, the tube furnace is heated to 900 degrees centigrade with a heating rate of 300 degrees centigrade per hour. The flow rate of argon is 200 milliliters per minute. After 6 hours' duration at 900 degrees centigrade, the furnace is cooled to ambient temperature with a cooling rate of 100 degrees centigrade per hour. The final obtained powder is the spherical pyrolyzed hard carbon material. The x-ray diffraction (XRD) pattern and morphology of the product are similar to sample HCS1. Using XRD method, the d₀₀₂ is measured to be 0.42 nanometers, La is 4.0 nanometers, Lc is 2.8 nanometers, and the average particle size is about 20 micrometers. Using BET method, the specific surface area is about 1250 square meters per gram, the diameter of the nanopores is about 0.6~35 nanometers, the real density is 1.65 grams per cubic centimeter, and the tap density is 0.73 grams per cubic centimeter.

### EXAMPLE 4

Mixture of 100 grams of sucrose, 50 grams of glucose and 50 grams of starch is firstly dissolved in 700 milliliters of water to form homogeneous dispersion system. Organic additive triethanolamine is added into above solution to a final concentration of 0.5 molar per liter. After stirring, the above mixture is put into an autoclave and the fill rate is 80 percent. The other conditions and processes to obtain the intermediate are the same as EXAMPLE 1, except the heating rate is increased to 600 degrees centigrade per hour.

Then the intermediate is put into a tube furnace. Under nitrogen atmosphere, the tube furnace is heated to 600 degrees centigrade with a heating rate of 300 degrees centigrade per hour. The flow rate of nitrogen is 0.5 milliliters per minute. After 48 hours' duration at 600 degrees centigrade, the furnace is cooled to ambient temperature with a cooling rate of 1 degree centigrade per hour. The final obtained powder is the spherical pyrolyzed hard carbon material. The x-ray diffraction (XRD) pattern and morphology of the product are similar to sample HCS1. Using XRD method, the d₀₀₂ is measured to be 0.445 nanometers, La is 2.1 nanometers, Lc is 1.8 nanometers, and the average particle size is about 6 micrometers. Using BET method, the specific surface area is about 410 square meters per gram, the diameter of the nanopores is about 0.6~12 nanometers, the real density is 1.69 grams per cubic centimeter, and the tap density is 1.31 grams per cubic centimeter.

### EXAMPLE 5

5 grams of sucrose is firstly dissolved in 300 milliliters of water to form homogeneous dispersion system. Organic additive tri-n-propylamine is added into above solution to a final concentration of 0.1 molar per liter. After stirring, the above mixture is put into an autoclave and the fill rate is 30 percent. The stirring speed of blender is 1500 rounds per minute during heating of the autoclave. The other conditions and processes to obtain the intermediate are the same as EXAMPLE 1, except there is no heating step involved.

Then the intermediate is put into a tube furnace. Under nitrogen atmosphere, the tube furnace is heated to 1000 degrees centigrade with a heating rate of 300 degrees centigrade per hour. The flow rate of nitrogen is 25 milliliters per minute. After 1 hour's duration at 1000 degrees centigrade, the furnace is cooled to ambient temperature with a cooling rate of 1500 degree centigrade per hour. The final obtained powder is the spherical pyrolyzed hard carbon material. The x-ray diffraction (XRD) pattern and morphology of the product are similar to sample HCS1. Using XRD method, the d₀₀₂ is measured to be 0.392 nanometers, La is 4.3 nanometers, Lc is 2.0 nanometers, and the average particle size is about 0.05 micrometers. Using BET method, the specific surface area is about 530 square meters per gram, the diameter of the nanopores is about 0.345~2 nanometers, the real density is 1.66 grams per cubic centimeter, and the tap density is 1.09 grams per cubic centimeter.

### EXAMPLE 6

150 grams of sucrose is firstly dissolved in 800 milliliters of water to form homogeneous dispersion system. The above mixture is then put into an autoclave and the fill rate is 85 percent. The heating rate of the autoclave is 6 degrees centigrade per hour. The other conditions and processes to obtain the intermediate are the same as EXAMPLE 1, except the heating duration at 200 degrees is extended to 48 hours.

Then the intermediate is put into a tube furnace. Under nitrogen atmosphere, the tube furnace is heated to 3000 degrees centigrade with a heating rate of 90 degrees centigrade per hour. The flow rate of nitrogen is 100 milliliters per minute. After 4 hours' duration at 3000 degrees centigrade, the furnace is cooled to ambient temperature with a cooling rate of 200 degree centigrade per hour. The final obtained powder is the spherical pyrolyzed hard carbon material. The x-ray diffraction (XRD) pattern and morphology of the product are similar to sample HCS1. Using XRD method, the d₀₀₂ is measured to be 0.345 nanometers, La is 6.1 nanometers, Lc is 20 nanometers, and the average particle size is about 5 micrometers. Using BET method, the specific surface area is about 120 square meters per gram, the diameter of the nanopores is about 0.5~0.9 nanometers, the real density is 2.18 grams per cubic centimeter, and the tap density is 1.43 grams per cubic centimeter.

### EXAMPLE 7

600 grams of phenolic resin is firstly dissolved in ethanol to form 500 milliliters of homogeneous dispersion system. Organic additive N,N-dimethylbenzylamine is added into above solution to a final concentration of 0.2 molar per liter with stirring. The above mixture is put into an autoclave and the fill rate is 50 percent. The autoclave is then heated to 300 degrees centigrade with a heating rate of 50 degrees centigrade per hour. After 10 hours' duration at 300 degrees centigrade, the autoclave is cooled to ambient temperature with a cooling rate of 5 degree centigrade per hour. The obtained powder is washed with ethanol till the filtrates being transparent. After drying at 120 degrees centigrade, we can obtain the intermediate.

Then the intermediate is put into a tube furnace. Under vacuum condition (the vacuum degree is 380 millimeter Hg), the tube furnace is heated to 1050 degrees centigrade with a heating rate of 30 degrees centigrade per hour. After 8 hours' duration at 1050 degrees centigrade, the furnace is cooled to ambient temperature with a cooling rate of 50 degree centigrade per hour. The final obtained powder is the spherical pyrolyzed hard carbon material. The x-ray diffraction (XRD) pattern and morphology of the product are similar to sample HCS1. Using XRD method, the d₀₀₂ is measured to be 0.373 nanometers, La is 3.1 nanometers, Lc is 2.8 nanometers, and the average particle size is about 35 micrometers. Using BET method, the specific surface area is about 100 square meters per gram, the diameter of the nanopores is about 0.8~20 nanometers, the real density is 1.89 grams per cubic centimeter, and the tap density is 1.42 grams per cubic centimeter.

### EXAMPLE 8

800 grams of phenolic resin is firstly dissolved in mixture of ethanol and acetone (volume ratio of 1:1) to form 750 milliliters of homogeneous dispersion system. Organic additive n-Dipropylamine is added into above solution to a final concentration of 0.5 molar per liter with stirring. The above mixture is put into an autoclave and the fill rate is 75 percent. The other conditions and processes to obtain the intermediate are the same as EXAMPLE 1, except the heating duration at 200 degrees is reduced to 5 hours.

Then the intermediate is put into a tube furnace. Under vacuum condition (the vacuum degree is 10 millimeter Hg), the tube furnace is heated to 850 degrees centigrade with a heating rate of 60 degrees centigrade per hour. After 8 hours' duration at 850 degrees centigrade, the furnace is cooled to ambient temperature with a cooling rate of 50 degree centigrade per hour. The final obtained powder is just the spherical pyrolyzed hard carbon material. The x-ray diffraction (XRD) pattern and morphology of the product are similar to sample HCS1. Using XRD method, the d₀₀₂ is measured to be 0.381 nanometers, La is 2.9 nanometers, Lc is 2.1 nanometers, and the average particle size is about 5 micrometers. Using BET method, the specific surface area is about 450 square meters per gram, the diameter of the nanopores is about 0.5~3.5 nanometers, the real density is 1.77 grams per cubic centimeter, and the tap density is 1.26 grams per cubic centimeter.

### EXAMPLE 9

100 grams of polyacrylonitrile is firstly dissolved in N,N-dimethylformamide to form 600 milliliters of homogeneous dispersion system. Organic additive pivalic amine is added into above solution to a final concentration of 0.05 molar per liter with stirring. The above mixture is put into an autoclave and the fill rate is 60 percent. The autoclave is then heated to 250 degrees centigrade with a heating rate of 100 degrees centigrade per hour. After 10 hours' duration at 250 degrees centigrade, the autoclave is cooled to ambient temperature with a cooling rate of 50 degree centigrade per hour. The obtained powder is washed by 75 percent ethanol aqueous solution till the filtrates being transparent. After drying at 120 degrees centigrade, we can obtain the intermediate.

Then the intermediate is put into a tube furnace. Under argon atmosphere, the tube furnace is heated to 1200 degrees centigrade with a heating rate of 60 degrees centigrade per hour. The argon flow rate is 5 milliliters per minute. After 4 hours' duration at 1200 degrees centigrade, the furnace is cooled to ambient temperature with a cooling rate of 3000 degree centigrade per hour. The final obtained powder is the spherical pyrolyzed hard carbon material. The x-ray diffraction (XRD) pattern and morphology of the product are similar to sample HCS1. Using XRD method, the d₀₀₂ is measured to be 0.379 nanometers, La is 3.6 nanometers, Lc is 2.4 nanometers, and the average particle size is about 12 micrometers. Using BET method, the specific surface area is about 190 square meters per gram, the diameter of the nanopores is about 0.8~50 nanometers, the real density is 1.72 grams per cubic centimeter, and the tap density is 1.21 grams per cubic centimeter.

### EXAMPLE 10

180 grams of polyacrylonitrile is firstly dissolved in N,N-dimethylformamide to form 450 milliliters of homogeneous dispersion system. Organic-additive tert-butylamine is added into above solution to a final concentration of 0.1 molar per liter with stirring. The above mixture is put into an autoclave and the fill rate is 45 percent. The other conditions and processes to obtain the intermediate are the same as EXAMPLE 9.

Then the intermediate is put into a tube furnace. Under nitrogen atmosphere, the tube furnace is heated to 1200 degrees centigrade with a heating rate of 60 degrees centigrade per hour. The argon flow rate is 25 milliliters per minute. After 8 hours' duration at 1200 degrees centigrade, the furnace is cooled to ambient temperature with a cooling rate of 1000 degree centigrade per hour. The final obtained powder is the spherical pyrolyzed hard carbon material. The x-ray diffraction (XRD) pattern and morphology of the product are similar to sample HCS1. Using XRD method, the d₀₀₂ is measured to be 0.371 nanometers, La is 4.2 nanometers, Lc is 2.8 nanometers, and the average particle size is about 25 micrometers. Using BET method, the specific surface area is about 104 square meters per gram, the diameter of the nanopores is about 0.6~5 nanometers, the real density is 1.86 grams per cubic centimeter, and the tap density is 1.37 grams per cubic centimeter.

### EXAMPLE 11

250 grams of starch is firstly dissolved in distilled water to form 500 milliliters of homogeneous dispersion system. Organic additive 3-methylpiperidine is added into above solution to a final concentration of 0.1 molar per liter. The above mixture is put into an autoclave and the fill rate is 50 percent. The autoclave is then heated to 250 degrees centigrade with a heating rate of 50 degrees centigrade per hour. After 1 hour's duration at 250 degrees centigrade, the autoclave is cooled to room temperature with a cooling rate of 10 degree centigrade per hour. The obtained powder is washed by distilled water till the filtrates being transparent. After drying at 120 degrees centigrade, we can obtain the intermediate.

Then the intermediate is put into a tube furnace. Under hydrogen atmosphere, the tube furnace is heated to 900 degrees centigrade with a heat rate of 120 degrees centigrade per hour. The hydrogen flow rate is 25 milliliters per minute. After 1 hour's duration at 900 degrees centigrade, the furnace is cooled to ambient temperature with a cooling rate of 100 degree centigrade per hour. The final obtained powder is just the spherical pyrolyzed hard carbon material. The x-ray diffraction (XRD) pattern and morphology of the product are similar to sample HCS1. Using XRD method, the d₀₀₂ is measured to be 0.366 nanometers, La is 2.8 nanometers, Lc is 1.9 nanometers, and the average particle size is about 80 micrometers. Using BET method, the specific surface area is about 450 square meters per gram, the diameter of the nanopores is about 0.6~1.2 nanometers, the real density is 1.88 grams per cubic centimeter, and the tap density is 1.45 grams per cubic centimeter.

### EXAMPLE 12

600 grams of starch is firstly dissolved in distilled water to form 600 milliliters of homogeneous dispersion system. Organic additive ethylenediamine is added into above solution to a final concentration of 0.01 molar per liter with stirring. The above mixture is put into an autoclave and the fill rate is 65 percent. The autoclave is then heated to 250 degrees centigrade with a heating rate of 300 degrees centigrade per hour. The other conditions and processes to obtain the intermediate are the same as EXAMPLE 11.

Then the intermediate is put into a tube furnace. Under hydrogen atmosphere, the tube furnace is heated to 1200 degrees centigrade with a heating rate of 120 degrees centigrade per hour. The hydrogen flow rate is 25 milliliters per minute. After 1 hour's duration at 1200 degrees centigrade, the furnace is cooled to room temperature with a cooling rate of 100 degree centigrade per hour. The obtained powder is further soaked in solution of potassium hydroxide (100 grams of KOH dissolved in water to form 200 milliliters of aqueous solution) for one day. Then under hydrogen atmosphere, the soaked powder is again heated to 900 degrees centigrade with a heating rate of 60 degrees centigrade per hour. The hydrogen flow rate is 25 milliliters per minute. After 1 hours' duration at 900 degrees centigrade, the furnace is cooled to room temperature with a cooling rate of 100 degree centigrade per hour. The final obtained powder is the activated spherical pyrolyzed hard carbon material. The x-ray diffraction (XRD) pattern and morphology of the product are similar to sample HCS1. Using XRD method, the d₀₀₂ is measured to be 0.389 nanometers, La is 3.1 nanometers, Lc is 2.2 nanometers, and the average particle size is about 4 micrometers. Using BET method, the specific surface area is about 1320 square meters per gram, the diameter of the nanopores is about 0.5~15 nanometers, the real density is 1.78 grams per cubic centimeter, and the tap density is 0.84 grams per cubic centimeter.

### EXAMPLE 13

1200 grams of cellulose acetate is firstly dissolved in distilled water to form 800 milliliters of homogeneous dispersion system. Organic additive dibutylamine is added into above solution to a final concentration of 0.1 molar per liter with stirring. The above mixture is put into an autoclave and the fill rate is 80 percent. The autoclave is then heated to 255 degrees centigrade with a heating rate of 50 degrees centigrade per hour. After 10 hours' duration at 255 degrees centigrade, the autoclave is cooled to ambient temperature with a cooling rate of 10 degree centigrade per hour. The obtained powder is washed by distilled water till the filtrates being transparent. After drying at 120 degrees centigrade, we can obtain the intermediate.

Then the intermediate is put into a tube furnace. Under nitrogen atmosphere, the tube furnace is heated to 900 degrees centigrade with a heating rate of 60 degrees centigrade per hour. The nitrogen flow rate is 25 milliliters per minute. After 6 hours' duration at 900 degrees centigrade, the furnace is cooled to ambient temperature with a cooling rate of 200 degree centigrade per hour. The final obtained powder is the spherical pyrolyzed hard carbon material. The x-ray diffraction (XRD) pattern and morphology of the product are similar to sample HCS1. Using XRD method, the d₀₀₂ is measured to be 0.382 nanometers, La is 2.6 nanometers, Lc is 1.8 nanometers, and the average particle size is about 30 micrometers. Using BET method, the specific surface area is about 210 square meters per gram, the diameter of the nanopores is about 0.5~8 nanometers, the real density is 1.69 grams per cubic centimeter; and the tap density is 1.38 grams per cubic centimeter.

### EXAMPLE 14

Mixture of 300 grams of cellulose acetate and 100 grams of phosphoric acid is firstly dissolved in distilled water to form 600 milliliters of homogeneous dispersion system. Add organic additive 2-imidazolinone into above solution to a final concentration of 0.05 molar per liter with stirring. The above mixture is put into an autoclave and the fill rate is 60 percent. The other conditions and processes to obtain the intermediate are the same as EXAMPLE 13.

Then the intermediate is put into a tube furnace. Under carbon dioxide atmosphere, the tube furnace is heated to 1000 degrees centigrade with a heating rate of 300 degrees centigrade per hour. The nitrogen flow rate is 25 milliliters per minute. After 16 hours' duration at 1000 degrees centigrade, the furnace is cooled to ambient temperature with a cooling rate of 20 degree centigrade per hour. The final obtained powder is the spherical pyrolyzed hard carbon material. The x-ray diffraction (XRD) pattern and morphology of the product are similar to sample HCS1. Using XRD method, the d₀₀₂ is measured to be 0.450 nanometers, La is 1 nanometer, Lc is 1.2 nanometers, and the average particle size is about 1 micrometers. Using BET method, the specific surface area is about 4000 square meters per gram, the diameter of the nanopores is about 0.4~25 nanometers, the real density is 0.84 grams per cubic centimeter, and the tap density is 0.35 grams per cubic centimeter.

### EXAMPLE 15

Mixture of 200 grams of epoxy and 100 grams of phthalic anhydride is firstly dissolved in ethanol to form 500 milliliters of homogeneous dispersion system. Add organic additive tetrapropylamine into above solution to a final concentration of 0.1 molar per liter with stirring. The above mixture is put into an autoclave and the fill rate is 50 percent. The autoclave is then heated to 180 degrees centigrade with a heating rate of 200 degrees centigrade per hour. After 8 hours' duration at 180 degrees centigrade, the autoclave is cooled to ambient temperature with a cooling rate of 50 degree centigrade per hour. The obtained powder is washed by ethanol till the filtrates being transparent. After drying at 120 degrees centigrade, we can obtain the intermediate.

Then the intermediate is put into a tube furnace. Under vacuum condition (the vacuum degree is 350 millimeter Hg), the tube furnace is heated to 1050 degrees centigrade with a heating rate of 300 degrees centigrade per hour. After 8 hours' duration at 1050 degrees centigrade, the furnace is cooled to ambient temperature with a cooling rate of 50 degree centigrade per hour. The final obtained powder is just the spherical pyrolyzed hard carbon material. The x-ray diffraction (XRD) pattern and morphology of the product are similar to sample HCS1. Using XRD method, the d₀₀₂ is measured to be 0.359 nanometers, La is 2.7 nanometers, Lc is 2.1 nanometers, and the average particle size is about 8 micrometers with a distribution of 1~12 micrometers. Using BET method, the specific surface area is about 21.0 square meters per gram; the diameter of the nanopores is about 0.8~1.8 nanometers, the real density is 1.67 grams per cubic centimeter, and the tap density is 1.28 grams per cubic centimeter.

### EXAMPLE 16

Mixture of 720 grams of epoxy and 360 grams of solidifying reagent phthalic anhydride is firstly dissolved in ethanol to form 900 milliliters of homogeneous dispersion system. Organic additive 4-methylpiperidine is added into above solution to a final concentration of 0.2 molar per liter. The above mixture is put into an autoclave and the fill rate is 90 percent. The autoclave is then heated to 150 degrees centigrade with a heating rate of 200 degrees centigrade per hour. The other conditions and processes to obtain the intermediate are the same as EXAMPLE 15.

Then the intermediate is put into a tube furnace. Under vacuum condition (the vacuum degree is 0.001 millimeter Hg), the tube furnace is heated to 850 degrees centigrade with a heating rate of 300 degrees centigrade per hour. After 1 hour's duration at 850 degrees centigrade, the furnace is cooled to room temperature with a cooling rate of 50 degree centigrade per hour. The final obtained powder is the spherical pyrolyzed hard carbon material. The x-ray diffraction (XRD) pattern and morphology of the product are similar to sample HCS1. Using XRD method, the d₀₀₂ is measured to be 0.365 nanometers, La is 2.1 nanometers, Lc is 1.4 nanometers, and the average particle size is about 20 micrometers. Using BET method, the specific surface area is about 150 square meters per gram, the diameter of the nanopores is about 0.8~2.5 nanometers, the real density is 1.82 grams per cubic centimeter, and the tap density is 1.41 grams per cubic centimeter.

### EXAMPLE 17

Mixture of 40 grams of polyformaldehyde, 120 grams of phenol and 320 grams of epoxy is firstly dissolved in ethanol to form 800 milliliters of homogeneous dispersion system. Organic additive dipentylamine is added into above solution to a final concentration of 0.05 molar per liter with stirring. The above mixture is put into an autoclave and the fill rate is 80 percent. The autoclave is then heated to 200 degrees centigrade with a heating rate of 50 degrees centigrade per hour. After 10 hours' duration at 200 degrees centigrade, the autoclave is cooled to ambient temperature with a cooling rate of 20 degree centigrade per hour. The obtained powder is washed first by distilled water and then by ethanol till the filtrates being transparent. After drying at 120 degrees centigrade, we can obtain the intermediate.

Then the intermediate is put into a tube furnace. Under argon atmosphere, the tube furnace is heated to 1000 degrees centigrade with a heating rate of 60 degrees centigrade per hour. The argon flow rate is 25 milliliters per minute. After 8 hours' duration at 1000 degrees centigrade, the furnace is cooled to ambient temperature with a cooling rate of 200 degree centigrade per hour. The final obtained powder is the spherical pyrolyzed hard carbon material. The x-ray diffraction (XRD) pattern and morphology of the product are similar to sample HCS1. Using XRD method, the d₀₀₂ is measured to be 0.379 nanometers, La is 3.1 nanometers, Lc is 2.2 nanometers, and the average particle size is about 12 micrometers with a distribution of 5~20 micrometers. Using BET method, the specific surface area is about 3.1 square meters per gram, the diameter of the nanopores is about 0.6~3 nanometers, the real density is 1.69 grams per cubic centimeter, and the tap density is 1.18 grams per cubic centimeter.

### EXAMPLE 18

Mixture of 75 grams of polyformaldehyde, 225 grams of phenol and 450 grams of epoxy is firstly dissolved in ethanol to form 750 milliliters of homogeneous dispersion system. Organic additive 2-methylpyridine is added into above solution to a final concentration of 0.1 molar per liter. The above mixture is put into an autoclave and the fill rate is 75 percent. The other conditions and processes to obtain the intermediate are the same as EXAMPLE 17, except the duration at 200 degrees centigrade is reduced to 6 hours.

Then the intermediate is put into a tube furnace. Under argon atmosphere, the tube furnace is heated to 1000 degrees centigrade with a heating rate of 60 degrees centigrade per hour. The argon flow rate is 25 milliliters per minute. After 8 hours' duration at 1000 degrees centigrade, the furnace is cooled to ambient temperature with a cooling rate of 200 degree centigrade per hour. The final obtained powder is just the spherical pyrolyzed hard carbon material. The x-ray diffraction (XRD) pattern and morphology of the product are similar to sample HCS1. Using XRD method, the d₀₀₂ is measured to be 0.374 nanometers, La is 3.1 nanometers, Lc is 2.1 nanometers, and the average particle size is about 45 micrometers with a distribution of 15~50 micrometers. Using BET method, the specific surface area is about 1.0 square meters per gram, the diameter of the nanopores is about 0.6~2.2 nanometers, the real density is 1.71 grams per cubic centimeter, and the tap density is 1.35 grams per cubic centimeter.

## Claims

1. A spherule or ellipsoid pyrolyzed hard carbon material, **characterised in that** the material comprises:
a smooth surface;
a particle size of 0.05- 100µm in diameter;
a specific Brunauer-Emmett-Teller area (BET area) of between 1 and 4000m²/g;
a micropore and mesopore pore size of 0.3-50nm;
a measured d₀₀₂ of 0.345 -0.45nm;
both an L_{c} and Lₐ of 1-20nm (from X-ray diffraction (XRD) measurements);
a real density of 0.8-2.2g/cm³; and
a tap density of 0.35-1.5g/cm³;
wherein the elements besides carbon in the material is not more than 10 percent of the weight of the material.

2. A method of preparing a pyrolyzed hard carbon material as claimed in claim 1, comprising the following steps:
(a) dispersing a precursor for hard carbon synthesis in a solvent to form a homogeneous dispersion with a concentration of 0.05-10 moles per litre;
(b) dewatering the homogeneous dispersion from step (a) in the liquid state by putting the dispersion into a pressure vessel with a fill rate of 30-95 percent and heating the sealed pressure vessel to a final temperature of 150-300 degrees centigrade at a heating rate of 30-600 degrees centigrade per hour, then maintaining the homogeneous dispersion in the pressure vessel at the final temperature for 0-48 hours;
(c) cooling the sealed pressure vessel to ambient temperature at a rate of 1-3000 degrees centigrade per hour, taking out the intermediate so formed and washing it with water, ethanol or its aqueous solution, filtering the intermediate until the filtrates are transparent and then drying the filtered intermediate at 50-200 degrees centigrade to remove any water; and
(d) carbonising the intermediate by placing it in a furnace either:
(i) under the protection of an inert or hydrogen atmosphere with a flow rate of 0.5-200 millilitres per minute; or
(ii) under a vacuum of 0.001-380mm Hg; with a heating rate of
30-300 degrees centigrade and once a final temperature of 600-3000 degrees centigrade has been reached maintaining it at constant temperature for 0-48 hours and then cooling to ambient temperature at a rate of 1-3000 degrees centigrade per hour;
wherein either:
I) the solvent is water and the precursor for hard carbon synthesis is glucose, sucrose, fructose, cellulose, starch or a mixture thereof in random ratio; or
II) the solvent is an organic solvent or mixture of organic solvents and the precursor for hard carbon synthesis is:
i) phenolic resin or polyacrylonitrile;
ii) a mixture of epoxy and solidifying reagent phthalic anhydride, wherein the content of epoxy is not less than 25 percent by weight; or
iii) a mixture of epoxy, polyformaldehyde and phenol,
wherein the content of epoxy is no less than 25 percent by weight, the content of phenol is not more than 10 percent in weight and the rest is polyformaldehyde.

3. A method as claimed in claim 2, wherein the solvent is water.

4. A method as claimed in claim 2, wherein the solvent is an organic solvent or mixture of organic solvents.

5. A method as claimed in claim 4, wherein the organic solvent is ethanol, acetone, N,N-dimethylformamide or a mixture thereof in a random ratio.

6. A method as claimed in any of claims 2 to 5, wherein the homogeneous dispersion is stirred in the pressure vessel with a rotation speed of 0-1500 rounds per minute.

7. A method as claimed in any of claims 2 to 6, wherein 0-5 moles per litre of organic additives are added to the homogeneous dispersion system.

8. A method as claimed in claim 7, wherein the organic additive is glycol, glycerol, tetraethyl ammonium hydroxide, n-Dipropylamine, tri-n-propylamine, N,N-diethylethanamine, triethanolamine, dibutylamine, pivalic amine, dipentylamine, isopropylamine, tert-butylamine, ethylenediamine, N,N-dimethylbenzylamine, dicyclohexylamine, N,N-dimethylpropanolamine, tetrapropylamine, quaternary ammonium salt, choline, 2-methylpyridine, 3-methylpiperidine, 4-methylpiperidine or 2-imidazolinone.

9. A method as claimed in any of claims 2 to 8, wherein an activation additive is added in any of the steps defined in steps (a), (c) and (d) of claim 2 at a weight ratio of the additive to the precursor of 0.1:10, wherein said activation additive is zinc chloride, potassium sulfide, potassium sulfate, sodium sulfate, sodium sulfide, phosphoric acid, potassium hydroxide, sodium hydroxide or lithium hydroxide.

10. A method as claimed in any of claims 2 to 8, wherein the material is activated though a gas activation process, wherein:
(a) the protection gas is displaced by activation gas during or after the step defined in step (d) of claim 2; or
(b) the activation gas flows together with the protection gas during the step defined in step (d) of claim 2;
wherein the activation gas is carbon dioxide, water vapour, air or oxygen and
wherein the flow rate of the activation gas is 0.5-200 millilitres per minute.

11. A pyrolyzed hard carbon material formed by a method as claimed in any of claims 2 to 10.

12. Use of a pyrolyzed hard carbon material as claimed in claim 1 or claim 11, as a negative electrode material for secondary lithium batteries, hydrogen storage material, active material of solid lubricants, raw material of industrial brush or electrodes, alloy additives in metallurgy, composite material with high flexibility, carrier for catalysts, sorbents for toxicants or for special uses, decolourisers for food production, or raw material for synthetic human organs.

## Patentansprüche

1. Pyrolysiertes Hartkohlenstoffmaterial in Kügelchen- oder Ellipsoidform, **dadurch gekennzeichnet, dass** das Material umfasst:
eine glatte Oberfläche;
eine Partikelgröße mit einem Durchmesser von 0,05 - 100 µm;
eine spezifische Brunauer-Emmett-Teller-Fläche (BET-Fläche) zwischen 1 und 4000 m²/g;
eine Mikroporen- und Mesoporenporengröße von 0,3 - 50 nm;
einen gemessenen d₀₀₂ von 0,345 - 0,45 nm;
sowohl eine L_{c} als auch Lₐ von 1 - 20 nm (aus Röntgenbeugungs-(XRD)-Messungen);
eine reale Dichte von 0,8 - 2,2 g/cm³; und
eine Klopfdichte von 0,35 - 1,5 g/cm³;
wobei die Elemente neben Kohlenstoff in dem Material nicht mehr als 10 % des Gewichts des Materials ausmachen.

2. Verfahren zum Herstellen von pyrolysiertem Hartkohlenstotimaterial wie in Anspruch 1 beansprucht, umfassend die folgenden Schritte:
(a) Dispergieren eines Vorläufers für Hartkohlenstoffsynthese in einem Lösungsmittel, um eine homogene Dispersion mit einer Konzentration von 0,05 - 10 Mol pro Liter auszubilden;
(b) Entwässern der homogenen Dispersion aus Schritt (a) in dem flüssigen Zustand, indem die Dispersion in ein Druckgefäß mit einem Befüllungsgrad von 30 - 95 Prozent gegeben wird und das versiegelte Druckgefäß auf eine Endtemperatur von 150 - 300 Grad Celsius mit einer Aufheizgeschwindigkeit von 30 - 600 Grad Celsius pro Stunde aufgeheizt wird, dann die homogene Dispersion in dem Druckgefäß für 0 - 48 Stunden bei der Endtemperatur gehalten wird;
(c) Abkühlen des versiegelten Druckgefäßes auf Raumtemperatur mit einer Geschwindigkeit von 1 - 3000 Grad Celsius pro Stunde, Herausnehmen des so ausgebildeten Zwischenproduktes und Waschen desselben mit Wasser, Ethanol oder seiner wässrigen Lösung, Filtrieren des Zwischenproduktes bis die Filtrate durchsichtig sind und dann Trocknen des filtrierten Zwischenproduktes bei 50 - 200 Grad Celsius, um jegliches Wasser zu entfernen; und
(d) Karbonisieren des Zwischenproduktes, indem es entweder:
(i) unter dem Schutz einer inerten Atmosphäre oder einer Wasserstoffatmosphäre mit einer Fließgeschwindigkeit von 0,5 - 200 Milliliter pro Minute; oder
(ii) unter einem Vakuum von 0,001- 380 mm Hg;
in einen Ofen mit einer Aufheizgeschwindigkeit von 30 - 300 Grad Celsius gegeben wird, und, wenn eine Endtemperatur von 600 - 3000 Grad Celsius erreicht worden ist, dasselbe bei konstanter Temperatur für 0-48 Stunden gehalten und dann mit einer Geschwindigkeit von 1-3000 Grad Celsius pro Stunde auf Umgebungstemperatur abgekühlt wird;
wobei entweder:
I) das Lösungsmittel Wasser ist und der Vorläufer für Hartkohlenstoffsynthese Glucose, Saccharose, Fructose, Zellulose, Stärke oder eine Mischung davon in einem zufälligen Verhältnis ist; oder
II) das Lösungsmittel ein organisches Lösungsmittel oder Mischung von organischen Lösungsmitteln ist und der Vorläufer für Hartkohlenstoffsynthese:
i) Phenolharz oder Polyacrylnitril;
ii) eine Mischung aus Epoxy und Phthalanhydrid als verfestigendes Reagens, wobei der Gehalt an Epoxy nicht weniger als 25 Gewichtsprozent beträgt; oder
iii) eine Mischung aus Epoxy, Polyformaldehyd und Phenol ist, wobei der Gehalt an Epoxy nicht weniger als 25 Gewichtsprozent, der Gehalt von Phenol nicht mehr als 10 Gewichtsprozent und der Rest Polyformaldehyd ist.

3. Verfahren nach Anspruch 2, wobei das Lösungsmittel Wasser ist.

4. Verfahren nach Anspruch 2, wobei das Lösungsmittel ein organisches Lösungsmittel oder eine Mischung organischer Lösungsmittel ist.

5. Verfahren nach Anspruch 4, wobei das organische Lösungsmittel Ethanol, Aceton, N,N-Dimethylformamid oder eine Mischung davon in einem zufälligen Verhältnis ist.

6. Verfahren nach einem der Ansprüche 2 bis 5, wobei die homogene Dispersion in dem Druckgefäß mit einer Rührgeschwindigkeit von 0 - 1500 Umdrehungen pro Minute gerührt wird.

7. Verfahren nach einem der Ansprüche 2 bis 6, wobei zu dem homogenen Dispersionssystem 0 - 5 Mol pro Liter organische Zusatzstoffe zugegeben werden.

8. Verfahren nach Anspruch 7, wobei der organische Zusatzstoff Glycol, Glycerol, Tetraethylammoniumhydroxid, n-Dipropylamin, tri-n-Propylamin, N,N-Diethylethanamin, Triethanolamin, Dibutylamin, Pivalinsäureamin, Dipentylamin, Isopropylamin, tert.-Butylamin, Ethylendiamin, N,N-Dimethylbenzylamin, Dicyclohexylamin, N,N-Dimethylpropanolamin, Tetrapropylamin, quartäres Ammoniumsalz, Cholin, 2-Methylpyridin, 3-Methylpiperidin, 4-Methylpiperidin oder 2-Imidazolinon ist.

9. Verfahren nach einem der Ansprüche 2 bis 8, wobei ein Aktivierungszusatzstoff in einem jeden der Schritte, die in den Schritten (a), (c) und (d) von Anspruch 2 definiert sind, mit einem Gewichtsverhältnis des Zusatzstoffes zu dem Vorläufer von 0,1:10 hinzugegeben wird, wobei der Aktivierungszusatzstoff Zinkchlorid, Kaliumsulfid, Kaliumsulfat, Natriumsulfat, Natriumsulfid, Phosphorsäure, Kaliumhydroxid, Natriumhydroxid oder Lithiumhydroxid ist.

10. Verfahren nach einem der Ansprüche 2 bis 8, wobei das Material durch ein Gasaktivierungsverfahren aktiviert wird, wobei:
(a) das Schutzgas durch Aktivierungsgas während oder nach dem Schritt, der in Schritt (d) von Anspruch 2 definiert ist, ersetzt wird; oder
(b) das Aktivierungsgas zusammen mit dem Schutzgas während des Schrittes fließt, der in Schritt (d) von Anspruch 2 definiert ist;
wobei das Aktivierungsgas Kohlendioxid, Wasserdampf, Luft oder Sauerstoff ist und
wobei die Fließgeschwindigkeit des Aktivierungsgases 0,5 - 200 Milliliter pro Minute beträgt.

11. Pyrolysiertes Hartkohlenstoffmaterial, hergestellt durch ein Verfahren wie in einem der Ansprüche 2 bis 10 beansprucht.

12. Verwendung von pyrolysiertem Hartkohlenstoffmaterial wie in Anspruch 1 oder Anspruch 11 beansprucht, als ein Material für die negative Elektrode bei sekundären Lithiumbatterien, Wasserstoffspeichermaterial, aktives Material von Starrschmiermitteln, Rohmaterial für Industriebürsten oder Elektroden, Legierungszusätze in der Metallurgie, Verbundmaterial mit hoher Flexibilität, Träger für Katalysatoren, Sorptionsmittel für toxische Stoffe oder spezielle Anwendungen, Entfärbungsmittel für die Lebensmittelherstellung oder Rohmaterial für synthetische menschliche Organe.

## Revendications

1. une sorte de petite sphère ou ellipsoïde de carbone dur pyrolysé, dans la présente invention, qui présente les caractéristiques suivantes :
une surface lisse,
un diamètre de particule de 0,05~1 00µm,
une surface spécifique Brunauer-Emmett-Teller (surface BET) située entre 1 et 4000 m²/g;
des micropores et des mésopores présents dans le matériau avec des tailles de pores de 0,3~50nm ;
la distance d₀₀₂ est 0,345~0,45 nm
les valeurs de Lc et La sont 1~20nm d'après les mesures par diffraction des rayons X (XRD);
la densité réelle est 0,8~2,2 g/cm³ et la
densité tapée est 0,35~1,5 g/cm³ ;
et la quantité d'éléments autres que le carbone est inférieure à 10 pourcent en masse du matériau.

2. une méthode pour préparer du carbone dur pyrolysé a été décrite dans la revendication 1, incluant les étapes suivantes:
a) Préparation d'une dispersion homogène. Le précurseur pour la synthèse de carbone dur est d'abord dispersé dans des solvants pour former une dispersion homogène avec une concentration de 0,05~10 moles par litre.
b) Déshydratation à l'état liquide. La dispersion homogène préparée à l'étape (a) est placée dans une autoclave avec une remplissage à 30~95 pour cents. L'autoclave scellée est chauffée jusqu'à une température finale de 150~300 degrés centigrades avec une rampe de chauffe de 30~600 degrés centigrades par heure. Le mélange devra être maintenu à la température finale pendant 0~48 heures.
c) Après refroidissement à température ambiante avec une vitesse de refroidissement de 1~3000 degrés centigrades par heure, le matériau intermédiaire est retiré de l'autoclave et lavé à l'eau, éthanol ou sa solution aqueuse à une concentration aléatoire, puis filtré jusqu'à ce que les filtrats soient transparents. Le matériau intermédiaire filtré est séché à 50~200 degrés centigrades pour retirer l'eau; et
d) Carbonisation à haute température. Après séchage, le matériau intermédiaire est placé dans un four
i) soit sous protection d'un gaz inerte, soit sous atmosphère d'hydrogène avec un flux de 0,5~200 millilitres par minute,
ii) soit sous un vide de 0,001~380mmHg ; une vitesse de chauffe de 30~300 degrés centigrades par heure. Après avoir atteint la température finale de 600~3000 degrés centigrades, le matériau intermédiaire est maintenu à une température constante de 0~48 heures, puis ensuite refroidi vers la température ambiante avec une vitesse de refroidissement de 1~3000 degrés centigrades par heure.
Pour lequel
I) le dissolvant est l'eau, et les précurseurs pour la synthèse de carbone dur pyrolysé incluent glucose, sucrose, fructose, cellulose, amidon ou un mélange dans le rapport aléatoire ;
II) le dissolvant est un solvant organique ou un mélange de solvants organiques et du précurseur pour la synthèse dure de carbone est :
i) et résine phénolique ou polyacrilonitrile ;
ii) mélange d'époxyde et d'agent solidifiant de type anhydride phtalique, où la teneur d'époxyde n'est pas moins de 25 pour cent en poids ;
iii) ou un mélange d'époxyde, polyformaldéhyde et phénol, où la teneur d'époxyde n'est pas moins de 25 pour cent en poids, la teneur du phénol n'est pas plus de 10 pour cent dans le poids et le repos sont polyformaldehyde.

3. une méthode selon la revendication 2, où le solvant est l'eau.

4. une méthode selon la revendication 2, où le solvant est un solvant organique ou un mélange de solvants organiques.

5. une méthode selon la revendication 4, où le solvant organique est éthanol, acétone, N, N-diméthylformamide ou un mélange dans un rapport aléatoire.

6. une méthode selon les revendications 2-5, où la dispersion homogène est remuée dans l'autoclave optionnel avec une vitesse de rotation de 0~1500 tours par minute.

7. une méthode basée sur la revendication 2-6 pour préparer le carbone dur **caractérisée par le fait qu'**elle inclue une étape d'addition d'additifs organiques à 0~5 moles par litre dans la dispersion homogène.

8. une méthode selon la revendication 7, Ces additifs organiques incluent : glycol, glycérol, hydroxyde de tétraéthylammonium, n-Dipropylamine, tri-n-propylamine, N,N-diéthyléthanamine, triéthanolamine, dibutylamine, amine pivalique, dipentylamine, isopropylamine, ter-butylamine, éthylènediamine, N,N-diméthylbenzylamine, dicyclohexylamine, N,N-diméthylpropanolamine, tetrapropylamine, sel d'ammonium quaternaire, choline, 2-méthylpyridine, 3-méthylpiperidine, 4-méthylepiperidine ou 2-imidazolinone.

9. une méthode basée sur les revendications 2-8 pour préparer un carbone dur pyrolysé **caractérisée par le fait qu'**elle inclue une étape d'addition d'additifs d'activation dans n'importe quelle étape des étapes (a), (c) ou (d) de la revendication 2 à un rapport de poids de l'additif au précurseur de 0.1:10. Les réactifs d'activation incluent : chlorure de zinc, sulfure de potassium, sulfate de potassium, sulfate de sodium, sulfure de sodium, acide phosphorique, hydroxyde de potassium, hydroxyde de sodium ou hydroxyde de lithium.

10. Une méthode basée sur les revendications 2-8, pour préparer le carbone dur **caractérisée par le fait qu'**elle inclue une étape d'activation au travers d'un processus d'activation grâce à un gaz.
(a) soit le gaz de protection est remplacé par le gaz d'activation pendant ou après l'étape d de la revendication 2,
(b) soit le gaz d'activation circule avec le gaz de protection pendant l'étape (d) de la revendication 2.
Les gaz d'activation incluent dioxyde de carbone, vapeur d'eau, air ou oxygène, pour lesquels le flux est 0,5~200 millilitres par minute.

11. Un carbone dur pyrolysé préparé par une méthode selon n'importe laquelle des revendications 2-10.

12. Application du carbone dur pyrolysé décrit dans la revendication 1 ou la revendication 11, où le carbone dur pyrolysé décrit est utilisé comme matériau d'électrode négative pour batterie lithium secondaire, matériau de stockage de l'hydrogène, matériau actif de lubrifiant solide, matière première de balai ou électrode industriels, additif aux alliages en métallurgie, matériau composite de grande souplesse, support de catalyseur, adsorbant d'agents toxiques ou pour des utilisations spéciales, décolorant pour production alimentaire, ou matière première pour des organes humains synthétiques.
